(19) **Europäisches Patentamt**
**European Patent Office**
**Office européen des brevets**

(11) **EP 1 891 144 B1**

(12) **EUROPEAN PATENT SPECIFICATION**

(45) Date of publication and mention
of the grant of the patent:
**03.12.2008 Bulletin 2008/49**

(51) Int Cl.:
**C08G 69/36** (2006.01)   **C08G 69/02** (2006.01)
**C08G 69/04** (2006.01)   **C08G 69/16** (2006.01)
**C08G 69/48** (2006.01)

(21) Application number: **06776058.7**

(22) Date of filing: **19.06.2006**

(86) International application number:
**PCT/EP2006/005859**

(87) International publication number:
**WO 2006/133968 (21.12.2006 Gazette 2006/51)**

(54) **INTRINSICALLY GEL-FREE, RANDOMLY BRANCHED POLYAMIDE**

INTRINSISCHES, GELFREIES, NACH DEM ZUFALLSPRINZIP VERZWEIGTES POLYAMID

POLYAMIDE A RAMIFICATIONS ALEATOIRES INTRINSEQUEMENT NON GELIFIANT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.06.2005 NL 1029279**

(43) Date of publication of application:
**27.02.2008 Bulletin 2008/09**

(73) Proprietor: **DSM IP Assets B.V.**
**6411 TE Heerlen (NL)**

(72) Inventors:
• **BRONSAER, Cornelia, Emilie, Maria
NL-6171 HM Stein (NL)**
• **RULKENS, Rudy
6267 EJ Cadier en Keer (NL)**

(74) Representative: **Verhaegen, Ilse Maria M.
DSM Intellectual Property
Office Geleen
P.O. Box 9
6160 MA Geleen (NL)**

(56) References cited:
**EP-A- 0 345 648        EP-A- 0 850 974
US-A- 3 893 981**

**Description**

The invention relates to an intrinsically gel-free, randomly branched polyamide built up at least of units derived from:

1. AB monomers;
2. at least one compound I, this being a dicarboxylic acid ($A_2$);
3. at least one compound II, this being a triamine ($B_3$); and
4. optionally a compound III, this being a monocarboxylic acid ($A_1$),

Such an intrinsically gel-free, randomly branched polyamide is known from EP-A-1159336. According to this application, such polymers can be obtained when the polyamide is built up of AB monomers and a combination of a multifunctional carboxylic acid and a multifunctional amide, with at least one of these two being at least difunctional and the other one being at least trifunctional. Optionally, a monocarboxylic acid is also present as chain regulator. Furthermore, the relative amounts of said components must meet a number of conditions in order to ensure that the material is intrinsically gel-free.

Although these demands impose a considerable limitation, it is still possible to make polyamides with widely varying properties within the boundaries of the prescribed recipe.

Branched polyamides can advantageously be used as functional layers in films, in which case the absence of gels is of major importance for obtaining transparent polyamide layers. A further demand to be met in such applications is a good adherability to the other, adjacent layers that are present in such multilayer films, directly or through insertion of an adhesion layer. Said application, however, does not give any indications as to which polyamides in the polyamides field covered possess good adhesion properties.

It is therefore the aim of the invention to provide intrinsically gel-free polyamides that can be applied with good adhesion properties in multilayer films.

This aim is achieved according to the invention in that the polyamide is also built up of units derived from at least one compound IV, this being an amine ($B_2$) with functionality 2; and in that the number of moles $n_i$ of the said compounds satisfies the following relationships:

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{5} \leq \frac{n_{B2}}{n_{B3}}$$

$$0.996 \leq \bar{f}_{nA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{nB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \tfrac{1}{400} n_{AB} + 3n_{A2}$$

It has been found that an intrinsically gel-free, branched polyamide possesses good adhesion properties when the above conditions are met.

Below, the terms mono-/di-/tri-acid/-amine and monofunctional/difunctional/trifunctional acid/amine will be used interchangeably and as being equivalent.

In the context of the present application, gel formation is understood to be a process in which a heterogeneous network is formed in a polymer material. Gel formation gives rise to, among other things, the formation of visible inhomogeneities ("gels") when the randomly branched polyamide is processed into, for instance, films and to deterioration of the mechanical properties of polyamide objects obtained from the randomly branched polyamide. It is also known that randomly branched polyamide may contain strongly crosslinked polyamide when it is processed in equipment in which local overheating may take place or in which polyamide material may accumulate, for instance in extruders and mixers.

In the context of the present application "intrinsically gel-free" is understood to mean that the composition of the randomly branched polyamide is such that it cannot form crosslinked polyamide (and therefore no gels either), in particular during prepolymerization, polymerization, post-condensation, processing, for instance into films, and storage of the randomly branched polyamide, which holds for a variety of ambient factors, for instance at elevated pressure and temperature.

As in EP-A-1159336, in the context of the present application a polyamide as described above is also qualified as being intrinsically gel-free when the amounts of all units derived from carboxylic acids and amines in the polyamide satisfy formula (1)

$$P < 1 / [(F_A - 1).(F_B - 1)] \qquad (1)$$

where :

$$P = [\Sigma \, (n_i.f_i)]_X / [\Sigma \, (n_i.f_i)]_Y \qquad (2)$$

where P < 1 and either X = A and Y = B, or X = B and Y = A and

$$F = \Sigma \, (n_i.f_i^2) / \Sigma \, (n_i.f_i) \qquad (3)$$

for, respectively, all carboxylic acids ($F_A$) and all amines ($F_B$), where $f_i$ is the functionality of the carboxylic acid (v) or amine (w) i, $n_i$ is the number of moles of the carboxylic acid or amine and the summation involves all units derived from carboxylic acids and amines in the polyamide. The carboxylic acid and amine groups in the AB monomer are not included as such in the calculations as defined in the above.

In the context of the present invention, AB monomer is understood to be a monomer that has both a carboxylic acid group (A) and an amine group (B) and a compound, in particular a lactam, from which, for instance through ring opening, a monomer can be formed that possesses a carboxylic acid group and an amine group.

In the context of the present application, compound I and compound II are also understood to be mixtures of several carboxylic acids having the same functionality or mixtures of several amines having the same functionality.

In the context of the present application, carboxylic acid and amine are understood to be, respectively, a compound which, besides one or more carboxylic acid groups, does not carry any amine groups, and vice versa. It follows that units derived from carboxylic acids or amines in the polymer have a chemical composition that differs from that of the units derived from the AB monomers. In the context of the present application, carboxylic acid group is understood to be a group that can form a covalent bond with an amine group, for instance -COOH, -COHal (Hal=halogen), - $CO_2R$, with R being an alkyl residue with 1 to 20 carbon atoms, and -$CO_2$Hal (Hal =Halogen).

In the context of the present application, functionality is understood to be the number of functional groups in, respectively, the carboxylic acid or the amine, that can form a bond with other carboxylic acids, amines or AB monomers in the randomly branched polyamide. A functional group that cannot form this bond, for instance a sterically hindered amine group or an aromatic amine group, is not counted as a functional group when determining the functionality. Likewise, the functionality is equated to 1 if two functional groups on a compound are both involved in a single bond with a third functional group, for instance two COOH groups that are close together and that form an imide bond with an amine, for instance in the compound ortho-dicarboxybenzene.

Eligible AB monomers are all AB monomers that can be used for the production of polyamides, in particular $\alpha$, $\omega$-amino acids and/or lactams, for instance caprolactam, laurine lactam and dodecalactam, as well as the corresponding amino acids and aromatic amino acids, for instance p-(aminomethyl)-benzoic acid. Preferably, the lactam is $\varepsilon$-caprolactam.

Eligible dicarboxylic acids ($A_2$) are for instance adipic acid, dodecane dicarboxylic acid, isophthalic acid and terephthalic acid as well as esters and anhydndes of said carboxylic acids. Preferably, the difunctional carboxylic acid is terephthalic acid.

Eligible triamines ($B_3$) are for instance trisaminononane and bis(hexamethylene triamine). Preferably, the trifunctional amine is bis(hexamethylene triamine).

Eligible difunctional amines ($B_2$) are for instance diaminobutane, diaminohexane, diaminododecane, cyclic amines, for instance 1,4-diaminocyclohexane, 4,4'-diaminobicyclohexylamine, 1,3- and 1,4-xylylene diamine. Preferably, the diamine is 1,6-hexamethylene diamine.

Preferably, the proportion of monofunctional carboxylic acids ($A_1$) (chain regulators) is greater than 0.

The intrinsically gel-free, randomly branched polyamide according to the invention can be produced using methods known to one skilled in the art, both via a batch process and via a continuous process. According to a first embodiment, all AB monomers, carboxylic acids and amines are polymerized in amounts according to the invention in a reactor at a suitable pressure and temperature. According to a second embodiment, the carboxylic acids and amines are added to a melt of a polyamide built up of units derived from AB monomers.

The intrinsically gel-free, randomly branched polyamide according to the invention can also contain the customary additives, for instance flame retardants, fillers, release agents, lubricants and colourants.

The intrinsically gel-free, randomly branched polyamide according to the invention is eminently suitable for the production of polyamide layers in multilayer films according to the processes known per se for this. Such polyamide layers prove to exhibit particularly good adhesion to the intermediary adhesion layers that are customary in multilayer film, for instance intermediary adhesion layers of maleic anhydride grafted polyolefines such as Yparex TM of DSM NV. It has been found that such multilayer films have an improved resistance to detachment of the polyamide layer from the adjacent layers. This is also advantageous because the processing window for producing such multilayer films becomes less critical.

The invention will be elucidated on the basis of the following examples, without however being limited thereto.

Examples

The branched polyamides used in the examples given below are prepared as follows:

Grade 1 (not according to the invention)

A mixture of caprolactam (AB), water, hexamethylenetriamine (B3), adipic acid (A2) and benzoic acid (A1), total 670 kg/hr was fed to a continuous polymerisation reactor (type AKU column). The composition is according to the data in the table below.

The reaction mixture is polymerized 14 hr in the melt at a top pressure of 1.07 bar and a reactor temperature between 270°C (top) and 250°C (bottom).

After reaction mixture the melt is cooled and granules are formed using underwater granulation technology. From the granules the residual monomer and oligomers are removed via hot water extraction at 100°C. Subsequently the pellets are continuously dried for 5 hrs at 130°C and postcondensated in a batch tumble dryer at 185°C until the desired relative viscosity is achieved.

Grade 2 (according to the invention)

Following the same procedure as described for grade 1, a mixture of caprolactam and additives, including hexamethylene diamine (B2) with the composition shown in the table below, is melt-polymerized, granulated, extracted, dried and postcondensated at 185°C.

Grade 3 (not according to the invention)

Following the same procedure as described for grades 1 and 2, a mixture of caprolactam and the same additives as described for grade 2 but differing in composition (see Table 1), is polymerized, granulated, extracted, dried and postcondensated,

Table 1

|  | Grade 1 | Grade 2 | Grade 3 |
|---|---|---|---|
| A1 (mole) | 2 | 1.94 | 2.3 |
| A2 (mole) | 1 | 1.58 | 1.2 |
| B2 (mole) | 0 | 0.83 | 0.35 |
| B3 (mole) | 1 | 1 | 1 |
| AB (mole) | 300 | 400 | 400 |
| Relative viscosity in formic acid | 3.13 | 3.00 | 3.05 |

Comparative Experiment A

A tri-layer film was produced with a PE layer at one side, a tie-layer as mid-layer comprising a MA (maleic anhydride) modified PE and a branched polyamide-6 (PA6) at the other side of the film. The tri-layer film was prepared by a film blow moulding process. Three single screw extruders were connected to a feedblock with a circular die with die diameter 120 mm.

The three extruders were fed with the following materials:

1. a LLDPE/LDPE blend (70/30% in weight)
2. a MA (maleic anhydride) modified PE containing tie-layer material (Yparex OH042) diluted with LLDPE for the tie layer in a ratio 20 parts Yparex / 80 parts LLDPE.
3. Branched PA6 material grade 1.

Information concerning the polyolefine materials is given in the table below.

| Material | Supplier | Reference | Melt flow index (g/10 min) | Density (g/cm3) |
|---|---|---|---|---|
| LDPE | SABIC | 2101TN00 | 0.85 | 0.921 |
| LLDPE | SABIC | 118N | 1 | 0.918 |
| MA modified PE | DSM | YPAREX OH042 | 2.7* | 0.928 |

*Measured at 215°C, 2.16kg

Processing temperatures of the die and of the three extruders, processing the indicated materials, are given below.

| Layer | Die | Screw | | | | | | |
|---|---|---|---|---|---|---|---|---|
| LLDPE/LDPE | | 190 | 200 | 210 | 220 | | | |
| MAmodified PE/LLDPE | 250 | 180 | 200 | 220 | 235 | | | |
| PA6 | | 200 | 275 | 270 | 265 | 265 | 260 | 260 |

**Processing temperatures (°C)**

The thickness distribution of the three layers is regulated by the individual throughputs of the extruders and is given by:

| Layer | Extrusion line output (kg/h) |
|---|---|
| LLDPE/LDPE | 24.9 |
| MA modified PE/ LLDPE | 5.11 |
| Branched PA6 | 15.2 |

The blow-up ratio, i,e. the diameter of the balloon divided by the diameter of the die, is 3.1. The total thickness of the resulting film is 90 $\mu$m and is realised with a take-up speed of 6.5 m/min. Under the given conditions, this leads to a thickness of 50 $\mu$m for the LLDPE/LDPE layer, 10 $\mu$m for the MA modified PE / LLDPE tie-layer and 30 $\mu$m for the branched PA6 grade 1 layer. The produced film is identified as tri-layer sample 1.

Example 1

The multilayer film production of Example 1 is identical to film production for Comp. Experiment A, except for the use of branched PA6 material grade 2 instead of grade 1. This leads to a tri-layer film with identical thickness as the film described in Comp. Exp. A. The resulting sample is identified as tri-layer sample 2.

Comparative Experiment B

The multilayer film production of Comp. Experiment B is identical to film production experiment for Comp. Exp A, except for the use of branched PA6 material grade 3 instead of grade 1. This leads to a tri-layer film with identical thickness as the film described for Comp. Exp A. The resulting sample is identified as tri-layer sample 3.

Adhesion peel test on tri-layer films

In order to test interlayer adhesion of these 3 layer films, strips of 15 mm wide were cut in the transverse direction of the film processing direction.
To test the interlayer adhesion of the tri-layer film strips, a mechanical peel test was carried out in a tensile rig. In order to obtain a mechanical initiation point, two tri-layer film strips were sealed at the PE / PE interfaces at a seal temperature of 120°C for 2 seconds under a pressure of 2.25 bar. At these conditions, the PE is melted and films are glued together while the tie-layer / PA6 interface and the PA6 material are not affected.
Manual deformation of the individual films connected by the seal leads to delamination of the weak MA modified PE / LLDPE - branched PA6 interface. Subsequently, these films are positioned in a tensile rig and deformed under well defined conditions. Further delamination beyond the sealed area of the strips is measured under a well defined deformation speed of 100 mm/min and results in a constant peel force. In all cases, this peel force reflects an adhesive failure at the MA modified PE / LLDPE - branched PA6 interface of one tri-layer system. The peel force measurements are carried out in 3-fold and the relative spread of the measured peel force amounts less than 10%.
Peel force values for trilayer samples 1, 2 and 3 are given below.

| | Peel force (N) |
|---|---|
| Tri-layer sample 1 (grade 1) | 3.7 |
| Tri-layer sample 2 (grade 2) | 9.8 |
| Tri-layer sample 3 (grade 3) | 3.9 |

**Claims**

1. Intrinsically gel-free, randomly branched polyamide built up at least of units derived from:

   a. AB monomers; being monomers that have both a carboxylic acid group (A) and an amine group (B);
   b. at least one compound I, this being a dicarboxylic acid ($A_2$);

c. at least one compound II, this being a triamine ($B_3$); and

d. optionally a compound III, this being a monocarboxylic acid ($A_1$),

**characterized in that**

the polyamide is also built up of units derived from

e. at least one compound IV, this being a diamine ($B_2$); and **in that** the relative amounts n, in moles, of the said compounds satisfy the following relationships:

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{5} \leq \frac{n_{B2}}{n_{B3}}$$

$$0.996 \leq \bar{f}_{nA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{nB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \frac{1}{400} n_{AB} + 3n_{A2}$$

2. Branched polyamide according to claim 1, wherein the dicarboxylic acid ($A_2$) is terephthalic acid.

3. Branched polyamide according to claim 1 or claim 2, wherein the triamine ($B_3$) is bis(hexamethylene triamine).

4. Branched polyamide according to any one of claims 1-3, wherein the diamine is 1,6-hexamethylene diamine.

5. Use of the branched polyamide according to any one of claims 1-4 for the preparation of a layer in a multilayer film.

6. Multilayer film in which at least one layer is made of a polyamide according to any one of claims 1-4.

**Patentansprüche**

1. Intrinsisch gelfreies, statistisch verzweigtes Polyamid, das mindestens aus Einheiten, die sich von

a. AB-Monomeren; wobei es sich um Monomere handelt, die sowohl eine Carbonsäuregruppe (A) als auch eine Amingruppe (B) aufweisen;

b. mindestens einer Verbindung I, bei der es sich um eine Dicarbonsäure ($A_2$) handelt;

c. mindestens einer Verbindung II, bei der es sich um ein Triamin ($B_3$) handelt; und

d. gegebenenfalls einer Verbindung III, bei der es sich um eine Monocarbonsäure ($A_1$) handelt,

ableiten, aufgebaut ist, **dadurch gekennzeichnet, daß** das Polyamid auch aus Einheiten, die sich von

e. mindestens einer Verbindung IV, bei der es sich um ein Diamin ($B_2$) handelt,

ableiten, aufgebaut ist und die relativen Mengen n in Mol der Verbindungen den folgenden Beziehungen genügen:

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{3} \leq \frac{n_{B2}}{n_{B3}}$$

$$0.996 \leq \bar{f}_{eA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{eB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \frac{1}{400} n_{AB} + 3n_{A2}$$

2. Verzweigtes Polyamid nach Anspruch 1, worin es sich bei der Dicarbonsäure ($A_2$) um Terephthalsäure handelt.

3. Verzweigtes Polyamid nach Anspruch 1 oder 2, worin es sich bei dem Triamin ($B_3$) um Bis(hexamethylentriamin) handelt.

4. Verzweigtes Polyamid nach einem der Ansprüche 1-3, worin es sich bei dem Diamin um 1,6-Hexamethylendiamin handelt.

5. Verwendung des verzweigten Polyamids nach einem der Ansprüche 1-4 zur Herstellung einer Schicht in einer Mehrschichtfolie.

6. Mehrschichtfolie, in der mindestens eine Schicht aus einem Polyamid nach einem der Ansprüche 1-4 besteht.

**Revendications**

1. Polyamide à ramifications aléatoires, intrinsèquement non gélifiant, constitué au moins de motifs dérivés:

a. de monomères AB; étant des monomères qui renferment à la fois un groupe acide carboxylique (A) et un groupe amine (B) ;
b. au moins un composé I, celui-ci étant un acide dicarboxylique ($A_2$) ;
c. au moins un composé II, celui-ci étant une triamine ($B_3$) ; et
d. éventuellement un composé III, celui-ci étant un acide monocarboxylique ($A_1$),
**caractérisé en ce que**
le polyamide est également constitué de motifs dérivés
e. d'au moins un composé IV, celui-ci étant une diamine ($B_2$) ; et **en ce que** les quantités relatives n, en moles, desdits composés satisfont aux relations suivantes :

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{5} \leq \frac{n_{B2}}{n_{B3}}$$

$$0.996 \leq \bar{f}_{nA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{nB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \frac{1}{400} n_{AB} + 3n_{A2}$$

2. Polyamide ramifié selon la revendication 1, dans lequel l'acide dicarboxylique ($A_2$) est l'acide téréphtalique.

3. Polyamide ramifié selon la revendication 1 ou la revendication 2, dans lequel la triamine ($B_3$) est la bis(hexaméthy-lène-triamine).

4. Polyamide ramifié selon l'une quelconque des revendications 1 à 3, dans lequel la diamine est la 1,6-hexaméthylène-diamine.

5. Utilisation du polyamide ramifié selon l'une quelconque des revendications 1 à 4 pour la préparation d'une couche dans un film multicouche.

6. Film multicouche dans lequel au moins une couche est composée d'un polyamide selon l'une quelconque des revendications 1 à 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1159336 A